# EUROPÄISCHE PATENTSCHRIFT

(11) **EP 3 259 499 B1**
(45) Veröffentlichungstag und Bekanntmachung des Hinweises auf die Patenterteilung: **12.12.2018**
(21) Anmeldenummer: 16701049.5
(22) Anmeldetag: 20.01.2016
(51) Int. Cl.: F16H 3/089

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE À MOTEUR

(30) Priorität: 19.02.2015 DE 102015002134
(43) Veröffentlichungstag der Anmeldung: 27.12.2017
(73) Patentinhaber: Audi AG, 85045 Ingolstadt (DE)
(72) Erfinder: HUMMEL, Steffen, 85055 Ingolstadt (DE)
(86) Internationale Anmeldenummer: PCT/EP2016/051116
(87) Internationale Veröffentlichungsnummer: WO 2016/131599

(56) Entgegenhaltungen:
- DE-A1-102010 040 660
- DE-A1-102011 089 167
- DE-A1-102012 013 248

## Beschreibung

Die vorliegende Erfindung betrifft ein Doppelkupplungsgetriebe für ein Kraftfahrzeug gemäß dem Oberbegriff des Patentanspruchs 1.

Derartige Doppelkupplungsgetriebe haben neben einem guten Wirkungsgrad unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Die Axiallänge des Doppelkupplungsgetriebes hängt von der Anzahl von Zahnradsätzen oder Radebenen ab, die in der Axialrichtung hintereinander im Doppelkupplungsgetriebe angeordnet sind. Jede der Radebenen ist aus zumindest zwei Fest- und/oder Loszahnräder aufgebaut. Zwischen den Radebenen sind Schaltelemente angeordnet, bei deren Betätigung Vor- und Rückwärtsgänge schaltbar sind.

Ein Doppelkupplungsgetriebe weist über Schaltelemente schaltbare Zahnradsätzen auf, die genau acht Radebenen bilden. Die Radebenen sind jeweils einem ersten Teilgetriebe und einem zweiten Teilgetriebe zugeordnet. Jedes der Teilgetriebe weist je eine Eingangswelle sowie eine gemeinsame Abtriebswelle auf. Die zueinander koaxialen Eingangswellen sind über je eine lastschaltbare Kupplung alternierend aktivierbar, wobei dem ersten Teilgetriebe die geraden Vorwärtsgänge sowie dem zweiten Teilgetriebe die ungeraden Vorwärtsgänge zugeordnet sind, die bei einer Gangschaltung über die Schaltelemente schaltbar sind. In dem gattungsgemäßen Doppelkupplungsgetriebe weist jede der Radebenen ein auf der jeweiligen Eingangswelle lose oder drehfest gelagertes Antriebszahnrad und ein damit kämmendes, auf der Abtriebswelle lose oder drehfest gelagertes abtriebsseitiges Zahnrad auf. Diese sind unter Bildung von Vorwärtsgängen mittels der Schaltelemente mit der Eingangswelle und/oder mit der Abtriebswelle kuppelbar oder davon abkuppelbar.

Aus der DE 10 2010 040 660 A1 ist ein Doppelkupplungsgetriebe in Vorgelegebauweise bekannt, welches unter den Wortlaut des Oberbegriffes des Anspruches 1 fällt. Aus der DE 10 2012 013 248 A1 ist eine Antriebsvorrichtung für Kraftfahrzeuge bekannt. Aus der DE 10 2011 089 167 A1 ist ein weiteres Doppelkupplungsgetriebe in Vorgelegebauweise bekannt.

Die Aufgabe der Erfindung besteht darin, ein Doppelkupplungsgetriebe bereitzustellen, dass bei einer baulich günstigen Konstruktion größere Freiheitsgrade in der Funktionalität (Schaltstrategie) und in der Auslegung der Gangstufen aufweist.

Die Aufgabe ist durch die Merkmale des Patentanspruches 1 gelöst. Bevorzugte Weiterbildungen der Erfindung sind in den abhängigen Ansprüchen offenbart.

Gemäß dem Patentanspruch 1 sind die in der Momentenflussrichtung von den Kupplungen K1, K2 ausgehende erste Radebene RE-1 und die zweite Radebene RE-2 im ersten Teilgetriebe über eine auf der Abtriebswelle koaxial drehgelagerte abtriebsseitige Hohlwelle drehfest miteinander verbunden. Auf der abtriebsseitigen Hohlwelle des ersten Teilgetriebes ist sowohl ein abtriebsseitiges Zahnrad der ersten Radebene als auch ein abtriebsseitiges Zahnrad der zweiten Radebene drehfest angeordnet. Die zweite Radebene (RE-2) und eine in Axialrichtung folgende dritte Radebene (RE-3) sind über eine antriebsseitige Hohlwelle des ersten Teilgetriebes drehfest miteinander verbunden, die auf der ersten Eingangswelle des ersten Teilgetriebes koaxial drehgelagert ist. Auf dieser antriebsseitigen Hohlwelle sind sowohl ein antriebsseitiges Zahnrad der zweiten Radebene als auch ein antriebsseitiges Zahnrad der dritten Radebene drehfest angeordnet. Mit einer derartigen Getriebestruktur können die drei Radebenen (RE-1 bis RE-3) schaltungstechnisch einfach insgesamt vier Vorwärtsgänge darstellen, und zwar drei Direkt-Vorwärtsgänge, die jeweils eine der drei Radebenen (RE-1 bis RE-3) nutzen, und einen Verwindungs-Vorwärtsgang, der die drei Radebenen in Kombination nutzt.

In einer schaltungstechnisch bevorzugten Variante kann die abtriebsseitige Hohlwelle des ersten Teilgetriebes über ein erstes Schaltelement (SE-F) mit der Abtriebswelle kuppelbar sein. Das erste Schaltelement kann von der Abtriebswelle getragen sein. Im Hinblick auf eine kompakte Getriebestruktur kann das erste Schaltelement (SE-F) quer zur Axialrichtung, das heißt in Radialrichtung, der antriebsseitigen Hohlwelle des ersten Teilgetriebes gegenüberliegen. Demgegenüber kann die antriebsseitige Hohlwelle des ersten Teilgetriebes über ein zweites Schaltelement mit der ersten Eingangswelle kuppelbar sein. Das zweite Schaltelement kann von der ersten Eingangswelle getragen sein. Im Hinblick auf eine kompakte Getriebestruktur kann das zweite Schaltelement quer zur Axialrichtung, das heißt in Radialrichtung, betrachtet der abtriebsseitigen Hohlwelle gegenüberliegen.

Das zweite Teilgetriebe kann, ähnlich wie das erste Teilgetriebe, ebenfalls eine abtriebsseitige Hohlwelle und eine antriebsseitige Hohlwelle aufweisen. In diesem Fall können die beiden abtriebsseitigen Zahnräder der siebten und achten Radebenen des zweiten Teilgetriebes auf der abtriebsseitigen Hohlwelle drehfest angeordnet sein, die auf der Abtriebswelle koaxial drehgelagert ist. Das zweite Teilgetriebe kann die sechste Radebene (RE-6) aufweisen, die auf der, den Kupplungen (K1, K2) zugewandten Seite der beiden Radebenen angeordnet ist. Die sechste Radebene (RE-6) kann mit der in Axialrichtung folgenden siebten Radebene (RE-7) über eine weitere antriebsseitige Hohlwelle drehfest verbunden sein, die auf der zweiten Eingangswelle des zweiten Teilgetriebes koaxial drehgelagert ist. Auf der antriebsseitigen Hohlwelle des zweiten Teilgetriebes kann sowohl ein antriebsseitigen Zahnrad der siebten Radebene drehfest angeordnet sein, als auch ein antriebsseitiges Zahnrad der sechsten Radebene lose drehgelagert sein. Das auf der antriebsseitigen Hohlwelle lose drehgelagerte antriebsseitige Zahnrad der sechsten Radebene kann mittels eines später beschriebenen sechsten Schaltelementes (SE-B) mit der antriebsseitigen Hohlwelle des zweiten Teilgetriebes gekuppelt werden.

Das obige zweite Schaltelement (SE-C) kann in einer technischen Umsetzung ein in der Axialrichtung beidseitig schaltbares Schaltelement sein. Das zweite Schaltelement (SE-C) kann in diesem Fall in der Axialrichtung zwischen den beiden antriebsseitigen Zahnräder der ersten und zweiten Radebenen (RE-1 und RE-2) angeordnet sein und von der Eingangswelle getragen werden.

Das erste Teilgetriebe weist zudem die dritte Radebene auf, die ein lose auf der Eingangswelle drehgelagertes antriebsseitiges Zahnrad und ein damit kämmendes, lose auf der Abtriebswelle drehgelagertes abtriebsseitiges Zahnrad aufweist. Das abtriebsseitige Zahnrad der dritten Radebene (RE-3) kann mittels des ersten Schaltelementes mit der Abtriebswelle kuppelbar sein. In diesem Fall kann das erste Schaltelement (SE-F) als ein in der Axialrichtung beidseitig schaltbares Schaltelement realisiert sein, das zwischen den beiden abtriebsseitigen Zahnrädern der zweiten und der dritten Radebene angeordnet ist.

Das antriebsseitige Zahnrad der dritten Radebene kann zusammen mit dem antriebsseitigen Zahnrad der zweiten Radebene drehfest auf einer, auf der ersten Eingangswelle koaxial drehgelagerten, antriebsseitigen Hohlwelle angeordnet sein.

Das erste Teilgetriebe weist erfindungsgemäß eine vierte Radebene auf, die ein drehfest auf der Abtriebswelle angeordnetes abtriebsseitiges Zahnrad und ein damit kämmendes, lose auf der antriebsseitigen Hohlwelle drehgelagertes antriebsseitiges Zahnrad aufweist. Das antriebsseitige Zahnrad der vierten Radebene (RE-4) kann mit einem dritten Schaltelement (SE-D) mit der antriebsseitigen Hohlwelle des ersten Teilgetriebes gekuppelt werden.

Das zweite Teilgetriebe weist erfindungsgemäß eine fünfte Radebene (RE-5) auf, die ein lose auf der zweiten Eingangswelle drehgelagertes antriebsseitiges Zahnrad und ein lose auf der Abtriebswelle drehgelagertes abtriebsseitiges Zahnrad besitzt. In einer bevorzugten Ausführungsvariante kann die fünfte Radebene (RE-5) nicht nur auf das zweite Teilgetriebe, sondern auch auf das erste Teilgetriebe schaltbar sein.

Das antriebsseitige Zahnrad der fünften Radebene kann mittels des oben erwähnten dritten Schaltelements (SE-D) mit der antriebsseitigen Hohlwelle des ersten Teilgetriebes gekuppelt werden. In diesem Fall ist das dritte Schaltelement (SE-D) ein in der Axialrichtung beidseitig schaltbares Schaltelement, das in der Axialrichtung zwischen der vierten Radebene (RE-4) und der fünften Radebene (RE-5) von der antriebsseitigen Hohlwelle des ersten Teilgetriebes getragen wird.

Das abtriebsseitige Zahnrad der fünften Radebene (RE-5) ist erfindungsgemäß über ein zusätzliches viertes Schaltelement (SE-G) mit der Abtriebswelle kuppelbar. Die beiden antriebsseitigen Zahnräder der siebten und achten Radebenen können über genau ein fünftes Schaltelement (SE-A) alternierend mit der zweiten Eingangswelle des zweiten Teilgetriebes gekuppelt werden. In diesem Fall kann das fünfte Schaltelement in der Axialrichtung zwischen den beiden antriebsseitigen Zahnrädern der siebten und achten Radebenen (RE-7 und RE-8) angeordnet sein und als ein beidseitig schaltbares Schaltelement ausgebildet sein.

Zwischen der fünften Radebene und der sechsten Radebene kann ein zusätzliches sechstes Schaltelement (SE-B) angeordnet, das ein in der Axialrichtung beidseitig wirkendes Schaltelement ist. Das sechste Schaltelement (SE-B) kann entweder das antriebsseitige Zahnrad der fünften Radebene (RE-5) oder das antriebsseitige Zahnrad der sechsten Radebene (RE-6) mit der antriebsseitigen Hohlwelle des zweiten Teilgetriebes kuppeln. Wie oben erwähnt, kann der, die fünfte Radebene bildende Zahnradsatz über das dritte Schaltelement mit dem ersten Teilgetriebe oder dem zweiten Teilgetriebe kuppelbar sein. Dadurch kann bei geringem getriebetechnischen Mehraufwand und ohne Verzicht auf den Vorteil der zugkraftunterbrechungsfreien Beschleunigung des Kraftfahrzeugs zumindest ein Vorwärtsgang übersprungen werden, also beispielsweise von einem ungeraden Vorwärtsgang verzögerungsfrei in den nächsten ungeraden Vorwärtsgang geschaltet werden. Insbesondere bei starken Motorisierungen des Kraftfahrzeugs und bei definierten Fahrbedingungen kann dies eine verbesserte, ohne Schaltverzögerungen ablaufende Beschleunigung und gegebenenfalls einen verbesserten Wirkungsgrad im Fahrbetrieb ermöglichen.

Besonders bevorzugt kann der, die fünfte Radebene bildende Zahnradsatz zumindest den 3. Vorwärtsgang des zweiten Teilgetriebes bilden, der mittel- oder unmittelbar wahlweise mit der Eingangswelle des einen oder des anderen Teilgetriebes (A, B) trieblich verbindbar ist. Daraus resultiert neben der regulären Schaltstrategie eine Variante, in der vom 1. Gang in den 3. Gang und bei Bedarf von diesem in den 5. Gang zugkraftunterbrechungsfrei geschaltet werden kann.

Ist bei einer entsprechenden, getriebetechnischen Auslegung der besagte Zahnradsatz auch in den Leistungsfluss des 1. Vorwärtsganges eingebunden, so kann auch hier das Teilgetriebe gewechselt werden, woraus ein zusätzlicher Freiheitsgrad in der Funktionalität geschaffen ist.

In einer vorteilhaften Weiterbildung der Erfindung können bei einem 12-Gang-Getriebe durch Mehrfachnutzung der Zahnradsätze nur acht Gangebenen verwendet sein, wobei der gemeinsam genutzte, die fünfte Radebene bildende Zahnradsatz des zweiten Teilgetriebes dem ersten Teilgetriebe unmittelbar benachbart angeordnet ist. Das Doppelkupplungsgetriebe kann somit baulich relativ kurz und mit geringst möglichen Schaltelementen und Gangstellern ausgeführt sein.

Des Weiteren können dazu Festzahnräder mehrerer Rad- oder Gangebenen beider Teilgetriebe auf jeweils gemeinsamen Hohlwellen befestigt und diese auf der gemeinsamen Abtriebswelle drehbar gelagert sowie über Schaltkupplungen (das heißt Schaltelemente) mit der Abtriebswelle koppelbar sein.

Ferner können weitere Festzahnräder der Gangebenen auf einer Hohlwelle angeordnet sein, die auf der Eingangswelle des einen Teilgetriebes gelagert ist und die mittels einer Schaltkupplung mit dem besagten Zahnradsatz des anderen Teilgetriebes kuppelbar ist.

Schließlich können bei möglichst geringem, getriebetechnischen Aufwand die zwölf Vorwärtsgänge mittels fünf Doppelkupplungen und einer Einfachkupplung schaltbar sein, wobei vier Doppelkupplungen auf den koaxial angeordneten beiden Eingangswellen der Teilgetriebe und eine Doppelkupplung sowie eine Einfachkupplung auf der gemeinsamen Abtriebswelle positioniert sind.

Ein Ausführungsbeispiel der Erfindung ist im Folgenden anhand der beigefügten Zeichnung näher beschrieben. Es zeigen:
- Fig. 1: als Blockschaltbild ein Geschwindigkeits-Wechselgetriebe für Kraftfahrzeuge mit zwei Teilgetrieben, die über zwei lastschaltbare Kupplungen aktivierbar sind und mit 12 schaltbaren Vorwärtsgängen, wobei ein Zahnradsatz des Getriebes für beide Teilgetriebe nutzbar ist; und
- Fig. 2: eine Schaltmatrix des Wechselgetriebes nach Fig. 1.

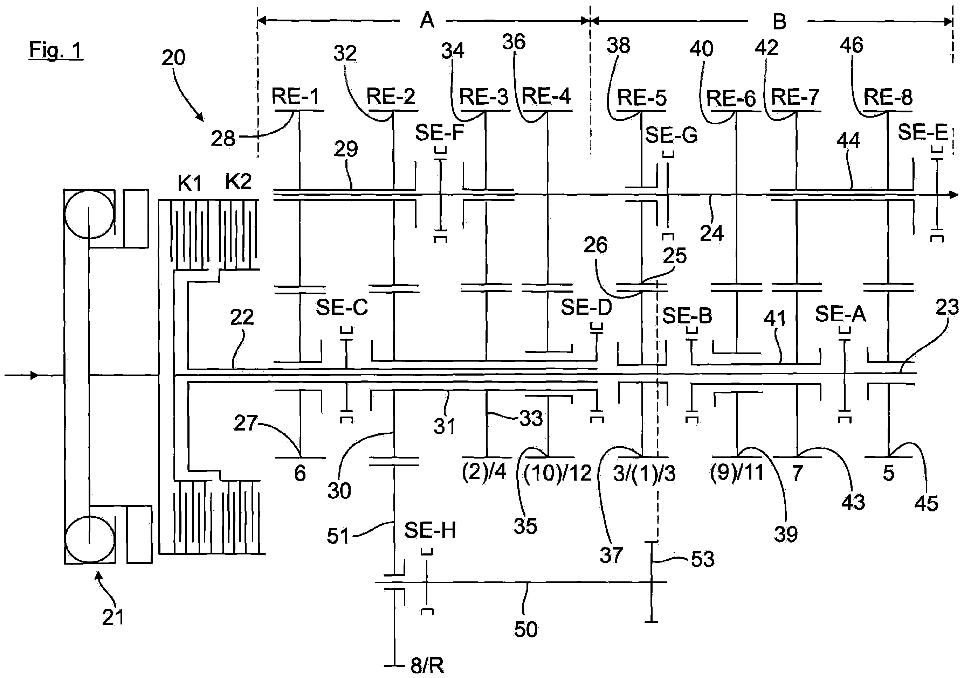

Die Fig. 1 zeigt ein Geschwindigkeits-Wechselgetriebe bzw. ein Doppelkupplungsgetriebe 20 für ein Kraftfahrzeug, mittels dem in acht Radebenen bzw. mit acht Zahnradsätzen RE-1 bis RE-8 bis zu zwölf Vorwärtsgänge 1 bis 12 schaltbar sind. Jede der Radebenen RE-1 bis RE-8 ist aus einem zur Eingangswelle 22, 23 koaxialen antriebsseitigen Zahnrad und einem zur Abtriebswelle 24 koaxialen abtriebsseitigen Zahnrad aufgebaut.

Das Wechselgetriebe 20 weist zwei zum Beispiel mit einer Brennkraftmaschine (nicht dargestellt) und einem Drehschwingungsdämpfer 21 trieblich verbundene und über zwei lastschaltbare Kupplungen K1, K2 alternierend kuppelbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze oder Radebenen RE-1 bis RE-8 sind in an sich bekannter Weise durch schaltbare Loszahnräder und durch Festzahnräder auf den Eingangswellen 22, 23 und auf einer gemeinsamen Abtriebswelle 24 in noch zu beschreibender Weise angeordnet, wobei die Zahnradsätze RE-1 bis RE-4 ein erstes Teilgetriebe A und die Zahnradsätze RE-5 bis RE-8 ein zweites Teilgetriebe B bilden.

Der Zahnradsatz RE-5 des Teilgetriebes B ist mit einem Festzahnrad 38 auf der Abtriebswelle 24 und einem schaltbaren Loszahnrad 26 auf der Eingangswelle 23 axial unmittelbar benachbart dem Teilgetriebe A derart angeordnet, dass dessen Loszahnrad 27 über eine Schaltkupplung SE-D entweder mit dem Teilgetriebe A oder über eine Schaltkupplung SE-B dem Teilgetriebe B kuppelbar ist.

Die Anordnung der übrigen Zahnradsätze ist derart, dass bei nur acht Zahnradsätzen RE-1 bis RE-8 die 12 Vorwärtsgänge realisierbar sind, wobei:
- das Loszahnrad 27 von RE-1 auf der Eingangswelle 22 und dessen Festzahnrad 28 auf einer koaxial zur Abtriebswelle 24 gelagerten Hohlwelle 29 drehfest angeordnet ist;
- ein Festzahnrad 30 von RE-2 über eine Hohlwelle 31 auf der Eingangswelle 22 gelagert und das korrespondierende Festzahnrad 32 ebenfalls auf der Hohlwelle 29 drehfest angeordnet ist;
- das Loszahnrad 27 und die Hohlwelle 31 mittels einer Schaltkupplung SE-C alternierend mit der Eingangswelle 22 kuppelbar sind;
- ein Festzahnrad 33 von RE-3 auf der Hohlwelle 31 angeordnet ist, während dessen Loszahnrad 34 oder die Hohlwelle 29 alternierend über eine Schaltkupplung SE-F mit der Abtriebswelle 24 kuppelbar sind;
- auf der Hohlwelle 31 ist ferner ein Loszahnrad 35 des Zahnradsatzes RE-4 gelagert, das mit einem Festzahnrad 36 auf der Abtriebswelle 24 kämmt;
- unmittelbar axial benachbart zum Loszahnrad 35 des Zahnradsatzes RE-4 ist das Loszahnrad 37 des Zahnradsatzes RE-5 auf der zentralen Eingangswelle 23 des Teilgetriebes B gelagert, das mit dem weiteren Festzahnrad 38 auf der Abtriebswelle 24 in Eingriff ist;
- die beiden Loszahnräder 35, 37 sind über eine weitere Schaltkupplung SE-D alternierend mit der Hohlwelle 31 auf der Eingangswelle 22 kuppelbar;
- zudem ist das Loszahnrad 37 über eine zweite Schaltkupplung SE-B mit einer auf der Eingangswelle 23 gelagerten Hohlwelle 41 kuppelbar, wobei die Hohlwelle 41 ein Loszahnrad 39 des Zahnradsatzes RE-6 trägt, das ebenfalls über die Schaltkupplung SE-B an die Hohlwelle 41 kuppelbar ist;
- das Loszahnrad 39 des Zahnradsatzes RE-6 kämmt mit einem weiteren Festzahnrad 40 auf der Abtriebswelle 24;
- die Hohlwelle 41 weist ferner ein Festzahnrad 43 des Zahnradsatzes RE-7 auf, das mit einem Festzahnrad 42 auf einer auf der Abtriebswelle 24 drehbar gelagerten Hohlwelle 44 in Eingriff ist;
- die Hohlwelle 41 auf der Eingangswelle 23 kann ferner über eine Schaltkupplung SE-A mit der Eingangswelle 23 verbunden werden, wobei die Schaltkupplung SE-A alternierend auch ein Loszahnrad 45 des Zahnradsatzes RE-8 an die Eingangswelle 23 kuppelt;
- das Festzahnrad 46 des Zahnradsatzes RE-8 ist analog zum Festzahnrad 42 des RE-7 auf der Hohlwelle 44 angeordnet, wobei die Hohlwelle 44 über eine Einfach-Schaltkupplung SE-E mit der Abtriebswelle 24 verbindbar ist.

Die Schaltkupplungen SE-C, SE-F, SE-D, SE-B und SE-A können als bekannte und bei Schaltgetrieben übliche Doppel-Synchronkupplungen (mit einer Stellung deren Schaltmuffen auf der Zeichnung Fig. 1 nach links (li) oder nach rechts (re) und die Schaltkupplung SE-E als eine Einfach-Synchronkupplung (Schaltstellung li) ausgeführt sein, die elektronisch gesteuert über entsprechende elektrisch/hydraulisch betätigte Aktoren jeweils aus einer Neutralstellung (wie gezeichnet) geschaltet werden.

Die Kupplungen K1, K2 können hydraulisch lastschaltbare Lamellenkupplungen sein, die alternierend betätigt das Teilgetriebe A oder B nach entsprechender Vorwahl der Gänge in den Antriebskraftfluss einkuppeln.

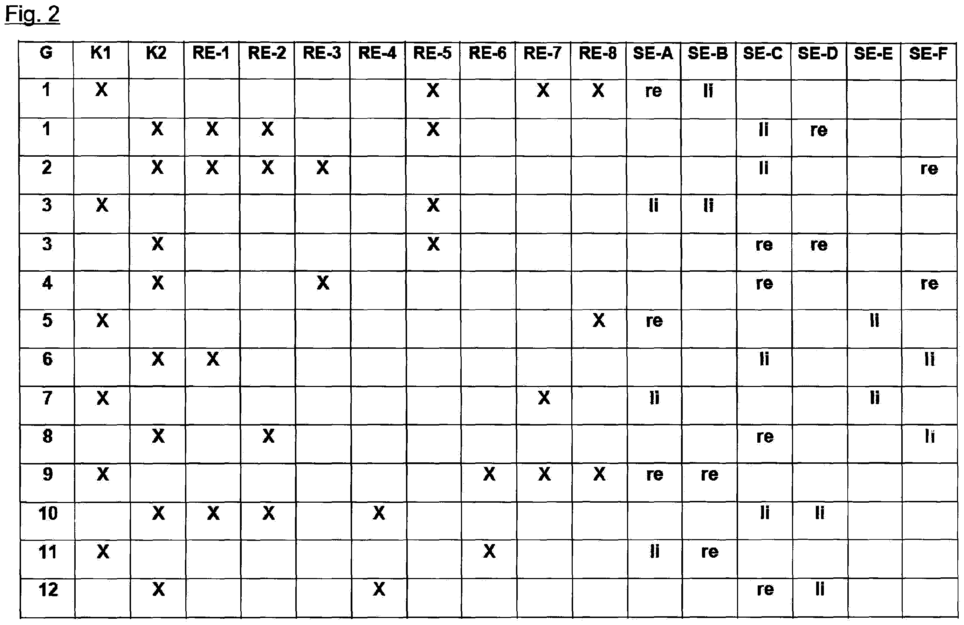

Die Vorwärtsgänge 1 bis 12 (ein gegebenenfalls erforderlicher Rückwärtsgang ist der Einfachheit halber nicht eingezeichnet) können gemäß der Schaltmatrix Fig. 2 geschaltet werden, wobei der jeweils geschaltete Gang (G) 1 bis 12 in der linken Spalte der Matrix angegeben ist. Die Kreuzchen (X) bezeichnen die in den jeweiligen Kraftfluss eingebundenen Zahnradsätze RE1 bis RE8 und die Bezeichnung (li) oder (re) die Schaltstellungen der jeweiligen Schaltkupplungen SE. Zu bemerken ist, dass die Gänge 1 und 3 in der Spalte G zweifach angegeben sind, da diese wahlweise über das Teilgetriebe B (Kupplung K1) oder das Teilgetriebe A (Kupplung K2) schaltbar sind.

Die reguläre Schaltfolge kann dementsprechend sein 1 - 2 - 3 - 4 - 5 ff., wobei der 1. Gang über die Kupplung K1 (Teilgetriebe B) und die weiteren Gänge durch alternierendes Schließen der Kupplungen K2, K1, K2, etc. erfolgt. In dem Teilgetriebe mit der offenen Kupplung kann wie bekannt der nächste Gang vorgewählt werden, wodurch durch Umschalten der Kupplungen K1, K2 ohne Unterbrechung der Zugkraft geschaltet werden kann.

In der modifizierten Schaltfolge kann der 2. Gang und gegebenenfalls auch der 4. Gang ohne Unterbrechung der Zugkraft übersprungen werden, wobei der Kraftfluss im 1.Gang über die Kupplung K1 oder K2 (Teilgetriebe A oder B) bei entsprechender Einbindung der Zahnradsätze RE-1 bis RE-8 und Stellung der Schaltkupplungen SE (siehe Matrix) gesteuert wird. Daraus resultiert, dass jeweils der 3. Gang und gegebenenfalls der 5.Gang bereits vorgewählt und durch Wechsel der lastschaltbaren Kupplung ohne Unterbrechung der Zugkraft aktivierbar ist.
Steuerbar sind somit neben der regulären Schaltfolge des Doppelkupplungsgetriebes 20 die modifizierten Schaltfolgen 1 - 3 - 4 - 5 - 6 ff. in der Folge K2, K1, K2, K1, K2 ff. oder 1 - 3 - 5 - 6, ff., in der Folge K1, K2, K1, K2 ff., wobei die Schaltfolgen abhängig von Betriebsdaten und Fahrparametern des Kraftfahrzeugs über eine elektronische Getriebesteuerung vorgebbar und/oder manuell einstellbar sind.

Wie aus Schaltmatrix der Fig. 2 weiter hervorgeht, sind die Vorwärtsgänge 3 bis 8 sowie 11 und 12 als Direktgänge ausgelegt, die jeweils genau eine in den Momentenfluss geschaltete Radebene aufweisen. Im Unterschied dazu sind die Vorwärtsgänge 1, 2 und 9 sowie 10 nicht als Direktgänge, sondern als Verwindungsgänge realisiert, in denen mittels der Schaltelemente SE-A bis SE-G jeweils genau drei Radebenen in Reihe kombiniert in den Momentenfluss geschaltet sind. Beispielhaft sind im ersten Vorwärtsgang (Verwindungsgang) die achte, siebte und fünfte Radebene RE-8, RE-7 und RE-5 im Momentenfluss geschaltet. Im 2. Vorwärtsgang (Verwindungsgang) sind die erste, zweite und dritte Radebene RE-1, RE-2, RE-3 in den Momentenfluss geschaltet. Im 9. Vorwärtsgang (Verwindungsgang) sind die achte, siebte und sechste Radebene RE-8, RE-7, RE-6 geschaltet. Bei eingelegtem 10. Vorwärtsgang (Verwindungsgang) sind die erste, zweite und vierte Radebene RE-1, RE-2 und RE-4 geschaltet.

Zur Bereitstellung des jeweiligen Verwindungs-Vorwärtsgangs 1, 2 und 9 sowie 10 sind die zu schaltenden drei Radebenen entweder komplett dem ersten Teilgetriebe A oder komplett dem zweiten Teilgetriebe B zugeordnet. Das heißt dass bei einem geschalteten Verwindungs-Vorwärtsgang nur das die drei Verwindungs-Radebenen aufweisende Teilgetriebe im Momentenfluss des eingelegten Ganges eingebunden ist, während das andere Teilgetriebe vollständig vom Momentenfluss abgekoppelt ist.

Zur Bildung eines Rückwärtsganges R ist achsparallel zu den Eingangswellen 22, 23 und der Abtriebswelle 24 eine die beide Teilgetriebe A, B überbrückende Rückwärtsgangwelle 50 im nicht dargestellten Getriebegehäuse des Doppelkupplungsgetriebes gelagert. Die Rückwärtsgangwelle 50 trägt zwei Umkehrzahnräder 51, 53, von denen das erste Umkehrzahnrad 51 mit dem antriebsseitigen Zahnrad 30 der zweiten Radebene RE-2 und das zweite Umkehrzahnrad 53 mit dem antriebsseitigen Zahnrad 37 der fünften Radebene RE-5 kämmt.

Das mit der zweiten Radebene RE-2 des Teilgetriebes A zusammenwirkende erste Umkehrzahnrad 51 ist als Loszahnrad ausgeführt und mittels eines einseitig schaltbaren Schaltelements SE-H an die Rückwärtsgangwelle 50 ankuppelbar. Das mit der fünften Radebene RE-5 zusammenwirkende Umkehrzahnrad 53 ist dagegen als ein Festzahnrad ausgeführt.

Der Rückwärtsgang R wird dadurch aktiviert, dass das von der ersten Eingangswelle 22 getragene Schaltelement SE-C in der Fig. 1 nach links auf das antriebsseitige Zahnrad 30 der ersten Radebene RE-1 geschaltet wird. Zudem wird das Schaltelement SE-H nach links auf das erste Umkehrzahnrad 51 geschaltet und wird das abtriebsseitige Zahnrad 38 der Zwischen-Radebene RE-5 über das Schaltelement SE-G mit der Abtriebswelle 24 gekuppelt. Der Rückwärtsgang R ist daher ein Verwindungsgang, wobei der Momentenfluss bei geschlossener Trennkupplung K2 über die hohle Eingangswelle 22 und das antriebsseitige Zahnrad 30 der zweiten Radebene RE-2 auf das erste Umkehrzahnrad 51 und weitere über die Rückwärtsgangwelle 50 sowie das zweite Umkehrzahnrad 53 auf das abtriebsseitige Zahnrad 38 der Zwischen-Radebene RE-5 verläuft.

## Patentansprüche

1. Doppelkupplungsgetriebe für ein Kraftfahrzeug, mit über erste bis siebte Schaltelemente schaltbaren Zahnradsätzen, die genau acht in Axialrichtung von der Eingangs- zur Ausgangsseite des Doppelkupplungsgetriebes in der Reihenfolge erste bis achte hintereinander angeordnete Radebenen (RE-1 bis RE-8) bilden, die jeweils einem ersten Teilgetriebe (A) und einem zweiten Teilgetriebe (B) zugeordnet sind, von denen das erste Teilgetriebe (A) eine erste Eingangswelle (22) aufweist und das zweite Teilgetriebe (B) eine zweite Eingangswelle (23) aufweist, und beide Teilgetriebe (A, B) eine gemeinsame, zu den Eingangswellen (22, 23) achsparallele Abtriebswelle (24) aufweisen, wobei die zueinander koaxialen Eingangswellen (22, 23) über je eine lastschaltbare Kupplung (K1, K2) alternierend aktivierbar sind, und dem ersten Teilgetriebe (A) die geraden Vorwärtsgänge (2, 4, 6, 8, 10, 12) sowie dem zweiten Teilgetriebe (B) die ungeraden Vorwärtsgänge (1, 3, 5, 7, 9, 11) zugeordnet sind, die bei einer Gangschaltung über die Schaltelemente (SE-A bis SE-G) schaltbar sind, wobei jede der Radebenen ein auf der jeweiligen Eingangswelle (22, 23) lose oder drehfest gelagertes Antriebszahnrad und ein damit kämmendes, auf der Abtriebswelle (24) lose oder drehfest gelagertes abtriebsseitiges Zahnrad aufweist, die unter Bildung von Vorwärtsgängen mittels der Schaltelemente (SE-A bis SE-G) mit der jeweiligen Eingangswelle (22, 23) und/oder mit der Abtriebswelle (24) kuppelbar oder davon abkuppelbar ist, wobei die erste Radebene (RE-1) und die zweite Radebene (RE-2) im ersten Teilgetriebe (A) über eine auf der Abtriebswelle (24) koaxial drehgelagerte abtriebsseitige Hohlwelle (29) des ersten Teilgetriebes (A) drehfest miteinander verbunden sind, und wobei auf der abtriebsseitigen Hohlwelle (29) des ersten Teilgetriebes (A) sowohl ein abtriebsseitiges Zahnrad (28) der ersten Radebene (RE-1) als auch ein abtriebsseitiges Zahnrad (32) der zweiten Radebene (RE-2) drehfest angeordnet ist, und wobei die zweite Radebene (RE-2) und eine in Axialrichtung folgende dritte Radebene (RE-3) über eine auf der ersten Eingangswelle (22) koaxial drehgelagerte antriebsseitige Hohlwelle (31) des ersten Teilgetriebes (A) drehfest miteinander verbunden sind, wobei auf der antriebsseitigen Hohlwelle (31) sowohl ein antriebsseitiges Zahnrad (30) der zweiten Radebene (RE-2) als auch ein antriebsseitiges Zahnrad (33) der dritten Radebene (RE-3) drehfest angeordnet sind, **dadurch gekennzeichnet, dass** das erste Teilgetriebe (A) eine vierte Radebene (RE-4) aufweist, die ein drehfest auf der Abtriebswelle (24) angeordnetes abtriebsseitiges Zahnrad (36) und ein damit kämmendes, lose auf der antriebsseitigen Hohlwelle (31) des ersten Teilgetriebes (A) drehgelagertes antriebsseitiges Zahnrad (35) aufweist, und dass das antriebsseitige Zahnrad (35) der vierten Radebene (RE-4) mit einem dritten Schaltelement (SE-D) mit der antriebsseitigen Hohlwelle (31) des ersten Teilgetriebes (A) kuppelbar ist, und dass das zweite Teilgetriebe (B) eine fünfte Radebene (RE-5) aufweist, die ein lose auf der zweiten Eingangswelle (23) drehgelagertes antriebsseitiges Zahnrad (37) und ein lose auf der Abtriebswelle (24) drehgelagertes abtriebsseitiges Zahnrad (38) aufweist, und dass das abtriebsseitige Zahnrad (38) der fünften Radebene (RE-5) über ein viertes Schaltelement (SE-G) mit der Abtriebswelle (24) kuppelbar ist.

2. Doppelkupplungsgetriebe nach Anspruch 1, **dadurch gekennzeichnet, dass** die abtriebsseitige Hohlwelle (29) des ersten Teilgetriebes (A) über ein erstes Schaltelement (SE-F) mit der Abtriebswelle (24) kuppelbar ist, und dass das erste Schaltelement (SE-F) von der Abtriebswelle (24) getragen ist und quer zur Axialrichtung, das heißt in Radialrichtung, der antriebsseitigen Hohlwelle (31) des ersten Teilgetriebes (A) gegenüberliegt.

3. Doppelkupplungsgetriebe nach Anspruch 1 oder 2, **dadurch gekennzeichnet, dass** die antriebsseitige Hohlwelle (31) des ersten Teilgetriebes (A) über ein zweites Schaltelement (SE-C) mit der ersten Eingangswelle (22) kuppelbar ist, und dass das zweite Schaltelement (SE-C) von der ersten Eingangswelle (22) getragen ist und quer zur Axialrichtung, das heißt in der Radialrichtung, der abtriebsseitigen Hohlwelle (29) gegenüberliegt.

4. Doppelkupplungsgetriebe nach einem der Ansprüche 1 bis 3, **dadurch gekennzeichnet, dass** das zweite Schaltelement (SE-C) ein in der Axialrichtung beidseitig schaltbares Schaltelement ist, und dass das zweite Schaltelement (SE-C) in der Axialrichtung zwischen den beiden antriebsseitigen Zahnrädern (27, 30) der ersten und zweiten Radebenen (RE-1, RE-2) angeordnet ist und von der ersten Eingangswelle (22) getragen ist.

5. Doppelkupplungsgetriebe nach Anspruch 4, **dadurch gekennzeichnet, dass** die dritte Radebene (RE-3) des ersten Teilgetriebes (A) ein lose auf der Abtriebswelle (24) drehgelagertes abtriebsseitiges Zahnrad (34) aufweist, das mit dem lose auf der ersten Eingangswelle (22) drehgelagerten antriebsseitigen Zahnrad (33) kämmt.

6. Doppelkupplungsgetriebe nach Anspruch 5, **dadurch gekennzeichnet, dass** das abtriebsseitige Zahnrad (34) der dritten Radebene (RE-3) mittels des ersten Schaltelements (SE-F) mit der Abtriebswelle (24) kuppelbar ist, und dass das erste Schaltelement (SE-F) als ein in Axialrichtung beidseitig schaltbares Schaltelement zwischen den beiden abtriebsseitigen Zahnrädern (32, 34) der zweiten und dritten Radebene (RE-2, RE-3) angeordnet ist.

7. Doppelkupplungsgetriebe nach Anspruch 5 oder 6, **dadurch gekennzeichnet, dass** das antriebsseitige Zahnrad (33) der dritten Radebene (RE-3) zusammen mit dem antriebsseitigen Zahnrad (30) der zweiten Radebene (RE-2) drehfest auf der, auf der ersten Eingangswelle (22) koaxial drehgelagerten antriebsseitigen Hohlwelle (31) des ersten Teilgetriebes (A) angeordnet ist.

8. Doppelkupplungsgetriebe nach Anspruch 1, **dadurch gekennzeichnet, dass** das antriebsseitige Zahnrad (37) der fünften Radebene (RE-5) mittels des dritten Schaltelements (SE-D) mit der antriebsseitigen Hohlwelle (31) des ersten Teilgetriebes (A) kuppelbar ist, und dass das dritte Schaltelement (SE-D) ein in der Axialrichtung beidseitig schaltbares Schaltelement ist, das in der Axialrichtung zwischen der vierten Radebene (RE-4) und der fünften Radebene (RE-5) von der antriebsseitigen Hohlwelle (31) des ersten Teilgetriebes (A) getragen ist.

9. Doppelkupplungsgetriebe nach einem der vorhergehenden Ansprüche, **dadurch gekennzeichnet, dass** das zweite Teilgetriebe (B) siebte und achte Radebenen (RE-7, RE-8) aufweist, und dass die beiden abtriebsseitigen Zahnräder (42, 46) der siebten und achten Radebenen (RE-7, RE-8) auf einer, auf der Abtriebswelle (24) koaxial drehgelagerten abtriebsseitigen Hohlwelle (44) des zweiten Teilgetriebes (B) drehfest angeordnet sind, und dass das zweite Teilgetriebe (B) eine sechste Radebene (RE-6) aufweist, die zusammen mit der in Axialrichtung folgenden siebten Radebene (RE-7) über eine auf der zweiten Eingangswelle (23) koaxial drehgelagerte antriebsseitige Hohlwelle (41) des zweiten Teilgetriebes (B) drehfest verbindbar ist, auf der sowohl ein antriebsseitiges Zahnrad (43) der siebten Radebene (RE-7) drehfest angeordnet ist, als auch ein antriebsseitiges Zahnrad (39) der sechsten Radebene (RE-6) lose drehgelagert ist.

10. Doppelkupplungsgetriebe nach Anspruch 9, **dadurch gekennzeichnet, dass** die beiden antriebsseitigen Zahnräder (43, 45) der siebten und achten Radebenen (RE-7, RE-8) über genau ein fünftes Schaltelement (SE-A) alternierend mit der Eingangswelle (23) des zweiten Teilgetriebes (B) kuppelbar ist, und dass insbesondere das fünfte Schaltelement (SE-A) in der Axialrichtung zwischen den beiden antriebsseitigen Zahnräder (43, 45) der siebten und achten Radebenen (RE-7, RE-8) von der zweiten Eingangswelle (23) getragen ist und als ein beidseitig schaltbares Schaltelement ausgebildet ist.

11. Doppelkupplungsgetriebe nach Anspruch 9 oder 10, **dadurch gekennzeichnet, dass** zwischen der fünften Radebene (RE-5) und der sechsten Radebene (RE-6) ein sechstes Schaltelement (SE-B) angeordnet ist, das ein in der Axialrichtung beidseitig wirkendes Schaltelement ist, und dass mittels des sechsten Schaltelements (SE-B) entweder das antriebsseitige Zahnrad (37) der fünften Radebene (RE-5) oder das antriebsseitige Zahnrad (39) der sechsten Radebene (RE-6) mit der antriebsseitigen Hohlwelle (41) des zweiten Teilgetriebes (B) kuppelbar ist.

## Claims

1. Dual-clutch transmission for a motor vehicle, comprising gear sets which are switchable via first to seventh shift elements and which form precisely eight wheel planes (RE-1 to RE-8) which are arranged in succession in a sequence of the first to the eighth in the axial direction from the input side to the output side of the dual-clutch transmission and which are respectively assigned to a first sub-transmission (A) and to a second sub-transmission (B), of which the first sub-transmission (A) has a first input shaft (22) and the second sub-transmission (B) has a second input shaft (23), and both sub-transmissions (A, B) have a common output shaft (24) which is axially parallel to the input shafts (22, 23), wherein the mutually coaxial input shafts (22, 23) can be alternately activated by a respective power-switchable clutch (K1, K2), and the even forward gears (2, 4, 6, 8, 10, 12) are assigned to the first sub-transmission (A) and the odd forward gears (1, 3, 5, 7, 9, 11) are assigned to the second sub-transmission (B), which can be shifted during a gear change via the shift elements (SE-A to SE-G), wherein each of the wheel planes has a drive gear which is mounted loosely or non-rotatably on the respective input shaft (22, 23), and an output-side gearwheel which engages therewith and is mounted loosely or non-rotatably on the output shaft (24), which can be coupled to or uncoupled from the respective input shaft (22, 23) and/or the output shaft (24) by the shift elements (SE-A to SE-G), with the formation of forward gears, wherein the first wheel plane (RE-1) and the second wheel plane (RE-2) are interconnected for co-rotation in the first sub-transmission (A) via an output-side hollow shaft (29), rotationally mounted coaxially on the output shaft (24), of the first sub-transmission (A), and wherein arranged non-rotationally on the output-side hollow shaft (29) of the first sub-transmission (A) is an output-side gearwheel (28) of the first wheel plane (RE-1) and also an output-side gearwheel (32) of the second wheel plane (RE-2), and wherein the second wheel plane (RE-2) and a third wheel plane (RE-3), following in the axial direction, are interconnected for co-rotation by a drive-side hollow shaft (31), rotationally mounted coaxially on the first input shaft (22), of the first sub-transmission (A), wherein arranged non-rotatably on the drive-side hollow shaft (31) is a drive-side gearwheel (30) of the second wheel plane (RE-2) and also a drive-side gearwheel (33) of the third wheel plane (RE-3), **characterised in that** the first sub-transmission (A) has a fourth wheel plane (RE-4) which has an output-side gearwheel (36) arranged non-rotatably on the output shaft (24), and a drive-side gearwheel (35) which engages therewith and is rotationally mounted loosely on the drive-side hollow shaft (31) of the first sub-transmission (A), and **in that** the drive-side gearwheel (35) of the fourth wheel plane (RE-4) can be coupled to the drive-side hollow shaft (31) of the first sub-transmission (A) by a third shift element (SE-D), and **in that** the second sub-transmission (B) has a fifth wheel plane (RE-5) which has a drive-side gearwheel (37) rotationally mounted loosely on the second input shaft (23), and an output-side gearwheel (38) rotationally mounted loosely on the output shaft (24), and **in that** the output-side gearwheel (38) of the fifth wheel plane (RE-5) can be coupled to the output shaft (24) by a fourth shift element (SE-G).

2. Dual-clutch transmission according to claim 1, **characterised in that** the output-side hollow shaft (29) of the first sub-transmission (A) can be coupled to the output shaft (24) by a first shift element (SE-F), and **in that** the first shift element (SE-F) is supported by the output shaft (24) and is opposite the drive-side hollow shaft (31) of the first sub-transmission (A) transversely to the axial direction, i.e. in the radial direction.

3. Dual-clutch transmission according to claim 1 or 2, **characterised in that** the drive-side hollow shaft (31) of the first sub-transmission (A) can be coupled to the first input shaft (22) by a second shift element (SE-C), and **in that** the second shift element (SE-C) is supported by the first input shaft (22) and is opposite the output-side hollow shaft (29) transversely to the axial direction, i.e. in the radial direction.

4. Dual-clutch transmission according to any of claims 1 to 3, **characterised in that** the second shift element (SE-C) is a shift element which can be shifted bilaterally in the axial direction, and **in that** the second shift element (SE-C) is arranged in the axial direction between the two drive-side gearwheels (27, 30) of the first and second wheel planes (RE-1, RE-2) and is supported by the first input shaft (22).

5. Dual-clutch transmission according to claim 4, **characterised in that** the third wheel plane (RE-3) of the first sub-transmission (A) has an output-side gearwheel (34) which is rotationally mounted loosely on the output shaft (24) and which engages with the drive-side gearwheel (33) which is rotationally mounted loosely on the first input shaft (22).

6. Dual-clutch transmission according to claim 5, **characterised in that** the output-side gearwheel (34) of the third wheel plane (RE-3) can be coupled to the output shaft (24) by means of the first shift element (SE-F), and **in that** the first shift element (SE-F) is arranged as a shift element which can be shifted bilaterally in the axial direction, between the two output-side gearwheels (32, 34) of the second and third wheel planes (RE-2, RE-3).

7. Dual-clutch transmission according to claim 5 or 6, **characterised in that** the drive-side gearwheel (33) of the third wheel plane (RE-3) is arranged non-rotatably, together with the drive-side gearwheel (30) of the second wheel plane (RE-2), on the drive-side hollow shaft (31), which is rotationally mounted coaxially on the first input shaft (22), of the first sub-transmission (A).

8. Dual-clutch transmission according to claim 1, **characterised in that** the drive-side gearwheel (37) of the fifth wheel plane (RE-5) can be coupled to the drive-side hollow shaft (31) of the first sub-transmission (A) by means of the third shift element (SE-D), and **in that** the third shift element (SE-D) is a shift element which can be shifted bilaterally in the axial direction and is supported by the drive-side hollow shaft (31) of the first sub-transmission (A) in the axial direction between the fourth wheel plane (RE-4) and the fifth wheel plane (RE-5).

9. Dual-clutch transmission according to any of the preceding claims, **characterised in that** the second sub-transmission (B) has seventh and eighth wheel planes (RE-7, RE-8), and **in that** the two output-side gearwheels (42, 46) of the seventh and eighth wheel planes (RE-7, RE-8) are arranged non-rotatably on an output-side hollow shaft (44), rotationally mounted coaxially on the output shaft (24), of the second sub-transmission (B), and **in that** the second sub-transmission (B) has a sixth wheel plane (RE-6) which, together with the seventh wheel plane (RE-7) following in the axial direction, can be connected for co-rotation via a drive-side hollow shaft (41), rotationally mounted coaxially on the second input shaft (23), of the second sub-transmission (B), on which hollow shaft a drive-side gearwheel (43) of the seventh wheel plane (RE-7) is arranged non-rotatably, and also a drive-side gearwheel (39) of the sixth wheel plane (RE-6) is loosely rotationally mounted.

10. Dual-clutch transmission according to claim 9, **characterised in that** the two drive-side gearwheels (43, 45) of the seventh and eighth wheel planes (RE-7, RE-8) can be coupled in an alternating manner to the input shaft (23) of the second sub-transmission (B) via precisely one fifth shift element (SE-A), and **in that** in particular the fifth shift element (SE-A) is supported by the second input shaft (23) in the axial direction between the two drive-side gearwheels (43, 45) of the seventh and eighth wheel planes (RE-7, RE-8), and is configured as a bilaterally shiftable shift element.

11. Dual-clutch transmission according to claim 9 or 10, **characterised in that** arranged between the fifth wheel plane (RE-5) and the sixth wheel plane (RE-6) is a sixth shift element (SE-B) which is a shift element operating bilaterally in the axial direction, and **in that** either the drive-side gearwheel (37) of the fifth wheel plane (RE-5) or the drive-side gearwheel (39) of the sixth wheel plane (RE-6) can be coupled to the drive-side hollow shaft (41) of the second sub-transmission (B) by means of the sixth shift element (SE-B).

## Revendications

1. Boîte de vitesses à double embrayage pour un véhicule à moteur, avec des trains de roues dentées commutables par le biais de premier à septième éléments de commutation, qui forment exactement huit plans de roue (RE-1 à RE-8) agencés l'un derrière l'autre dans l'ordre un à huit dans la direction axiale du côté entrée au côté sortie de la boîte de vitesses à double embrayage, qui sont attribués respectivement à une première demi-boîte (A) et à une deuxième demi-boîte (B), desquelles la première demi-boîte (A) présente un premier arbre d'entrée (22) et la deuxième demi-boîte (B) présente un deuxième arbre d'entrée (23), et les deux demi-boîtes (A, B) présentent un arbre de sortie commun (24), axialement parallèle aux arbres d'entrée (22, 23), dans laquelle les arbres d'entrée (22, 23) coaxiaux l'un à l'autre sont activables de manière alternée par le biais de respectivement un embrayage commutable sous charge (K1, K2), et les rapports de marche avant pairs (2, 4, 6, 8, 10, 12) sont attribués à la première demi-boîte (A) et les rapports de marche avant impairs (1, 3, 5, 7, 9, 11) sont attribués à la deuxième demi-boîte (B), qui sont commutables lors d'un changement de vitesses par le biais des éléments de commutation (SE-A à SE-G), dans laquelle chacun des plans de roue présente une roue dentée d'entraînement logée solidaire en rotation ou librement sur l'arbre d'entrée (22, 23) respectif et une roue dentée côté sortie logée solidaire en rotation ou librement sur l'arbre de sortie (24), s'engrenant avec celle-ci, qui peut être couplée avec l'arbre d'entrée (22, 23) respectif et/ou avec l'arbre de sortie (24) au moyen des éléments de commutation (SE-A à SE-G) en formant des rapports de marche avant ou en être découplée, dans laquelle le premier plan de roue (RE-1) et le deuxième plan de roue (RE-2) dans la première demi-boîte (A) sont reliés l'un à l'autre solidaires en rotation par le biais d'un arbre creux côté sortie (29) de la première demi-boîte (A) logé en rotation coaxialement sur l'arbre de sortie (24), et dans laquelle aussi bien une roue dentée côté sortie (28) du premier plan de roue (RE-1) qu'une roue dentée côté sortie (32) du deuxième plan de roue (RE-2) est agencée solidaire en rotation sur l'arbre creux côté sortie (29) de la première demi-boîte (A), et dans laquelle le deuxième plan de roue (RE-2) et un troisième plan de roue (RE-3) suivant dans la direction axiale sont reliés l'un à l'autre solidaires en rotation par le biais d'un arbre creux côté entraînement (31) de la première demi-boîte (A) logé en rotation coaxialement sur le premier arbre d'entrée (22), dans laquelle aussi bien une roue dentée côté entraînement (30) du deuxième plan de roue (RE-2) qu'une roue dentée côté entraînement (33) du troisième plan de roue (RE-3) sont agencées solidaires en rotation sur l'arbre creux côté entraînement (31), **caractérisée en ce que** la première demi-boîte (A) présente un quatrième plan de roue (RE-4), qui présente une roue dentée côté sortie (36) agencée solidaire en rotation sur l'arbre de sortie (24) et une roue dentée côté entraînement (35) logée en rotation librement sur l'arbre creux côté entraînement (31) de la première demi-boîte (A), s'engrenant avec celle-ci, et que la roue dentée côté entraînement (35) du quatrième plan de roue (RE-4) peut être couplée avec un troisième élément de commutation (SE-D) avec l'arbre creux côté entraînement (31) de la première demi-boîte (A), et que la deuxième demi-boîte (B) présente un cinquième plan de roue (RE-5), qui présente une roue dentée côté entraînement (37) logée en rotation librement sur le deuxième arbre d'entrée (23) et une roue dentée côté sortie (38) logée en rotation librement sur l'arbre de sortie (24), et que la roue dentée côté sortie (38) du cinquième plan de roue (RE-5) peut être couplée avec l'arbre de sortie (24) par le biais d'un quatrième élément de commutation (SE-G).

2. Boîte de vitesses à double embrayage selon la revendication 1, **caractérisée en ce que** l'arbre creux côté sortie (29) de la première demi-boîte (A) peut être couplé avec l'arbre de sortie (24) par le biais d'un premier élément de commutation (SE-F), et que le premier élément de commutation (SE-F) est porté par l'arbre de sortie (24) et est opposé transversalement à la direction axiale, autrement dit dans la direction radiale, de l'arbre creux côté entraînement (31) de la première demi-boîte (A).

3. Boîte de vitesses à double embrayage selon la revendication 1 ou 2, **caractérisée en ce que** l'arbre creux côté entraînement (31) de la première demi-boîte (A) peut être couplé avec le premier arbre d'entrée (22) par le biais d'un deuxième élément de commutation (SE-C), et que le deuxième élément de commutation (SE-C) est porté par le premier arbre d'entrée (22) et est opposé transversalement à la direction axiale, autrement dit dans la direction radiale, de l'arbre creux côté sortie (29).

4. Boîte de vitesses à double embrayage selon l'une quelconque des revendications 1 à 3, **caractérisée en ce que** le deuxième élément de commutation (SE-C) est un élément de commutation commutable des deux côtés dans la direction axiale, et que le deuxième élément de commutation (SE-C) est agencé dans la direction axiale entre les deux roues dentées côté entraînement (27, 30) des premier et deuxième plans de roue (RE-1, RE-2) et est porté par le premier arbre d'entrée (22).

5. Boîte de vitesses à double embrayage selon la revendication 4, **caractérisée en ce que** le troisième plan de roue (RE-3) de la première demi-boîte (A) présente une roue dentée côté sortie (34) logée en rotation librement sur l'arbre de sortie (24), qui s'engrène avec la roue dentée côté entraînement (33) logée en rotation librement sur le premier arbre d'entrée (22).

6. Boîte de vitesses à double embrayage selon la revendication 5, **caractérisée en ce que** la roue dentée côté sortie (34) du troisième plan de roue (RE-3) peut être couplée avec l'arbre de sortie (24) au moyen du premier élément de commutation (SE-F), et que le premier élément de commutation (SE-F) est agencé en tant qu'élément de commutation commutable des deux côtés dans la direction axiale entre les deux roues dentées côté sortie (32, 34) du deuxième et troisième plan de roue (RE-2, RE-3).

7. Boîte de vitesses à double embrayage selon la revendication 5 ou 6, **caractérisée en ce que** la roue dentée côté entraînement (33) du troisième plan de roue (RE-3) est agencée conjointement avec la roue dentée côté entraînement (30) du deuxième plan de roue (RE-2) solidaire en rotation sur l'arbre creux côté entraînement (31) de la première demi-boîte (A) logé en rotation coaxialement sur le premier arbre d'entrée (22).

8. Boîte de vitesses à double embrayage selon la revendication 1, **caractérisée en ce que** la roue dentée côté entraînement (37) du cinquième plan de roue (RE-5) peut être couplée avec l'arbre creux côté entraînement (31) de la première demi-boîte (A) au moyen du troisième élément de commutation (SE-D), et que le troisième élément de commutation (SE-D) est un élément de commutation commutable des deux côtés dans la direction axiale, qui est porté dans la direction axiale entre le quatrième plan de roue (RE-4) et le cinquième plan de roue (RE-5) par l'arbre creux côté entraînement (31) de la première demi-boîte (A).

9. Boîte de vitesses à double embrayage selon l'une quelconque des revendications précédentes, **caractérisée en ce que** la deuxième demi-boîte (B) présente des septième et huitième plans de roue (RE-7, RE-8), et que les deux roues dentées côté sortie (42, 46) des septième et huitième plans de roue (RE-7, RE-8) sont agencées solidaires en rotation sur un arbre creux côté sortie (44) de la deuxième demi-boîte (B) logé en rotation coaxialement sur l'arbre de sortie (24), et que la deuxième demi-boîte (B) présente un sixième plan de roue (RE-6), qui peut être relié solidaire en rotation conjointement avec le septième plan de roue (RE-7) suivant dans la direction axiale par le biais d'un arbre creux côté entraînement (41) de la deuxième demi-boîte (B) logé en rotation coaxialement sur le deuxième arbre d'entrée (23), sur lequel aussi bien une roue dentée côté entraînement (43) du septième plan de roue (RE-7) est agencée solidaire en rotation qu'une roue dentée côté entraînement (39) du sixième plan de roue (RE-6) est logée en rotation librement.

10. Boîte de vitesses à double embrayage selon la revendication 9, **caractérisée en ce que** les deux roues dentées côté entraînement (43, 45) des septième et huitième plans de roue (RE-7, RE-8) peut être couplée de manière alternée avec l'arbre d'entrée (23) de la deuxième demi-boîte (B) par le biais d'exactement un cinquième élément de commutation (SE-A), et qu'en particulier le cinquième élément de commutation (SE-A) est porté dans la direction axiale entre les deux roues dentées côté entraînement (43, 45) des septième et huitième plans de roue (RE-7, RE-8) par le deuxième arbre d'entrée (23) et est réalisé en tant qu'élément de commutation commutable des deux côtés.

11. Boîte de vitesses à double embrayage selon la revendication 9 ou 10, **caractérisée en ce qu'**un sixième élément de commutation (SE-B) est agencé entre le cinquième plan de roue (RE-5) et le sixième plan de roue (RE-6), qui est un élément de commutation agissant des deux côtés dans la direction axiale, et que soit la roue dentée côté entraînement (37) du cinquième plan de roue (RE-5) soit la roue dentée côté entraînement (39) du sixième plan de roue (RE-6) peut être couplée avec l'arbre creux côté entraînement (41) de la deuxième demi-boîte (B) au moyen du sixième élément de commutation (SE-B).
